# EUROPEAN PATENT SPECIFICATION

(11) **EP 1 710 879 B1**
(45) Date of publication and mention of the grant of the patent: **29.12.2010**
(21) Application number: 06111289.2
(22) Date of filing: 16.03.2006
(51) Int. Cl.: H02B 1/30

(54) **Mounting system for attaching covering panels onto upright members**
Montagevorrichtung zum Befestigen von Paneelen an Rahmenschenkeln
Système de montage pour attacher des panneaux sur montants

(30) Priority: 05.04.2005 IT PN20050013 U
(43) Date of publication of application: 11.10.2006
(73) Proprietor: Hager-Lumetal S.p.A., 33080 Porcia, Pordenone (IT)
(72) Inventor: Moretto, Massimiliano, 30026 Portogruaro (Venezia) (IT); Dal Santo, Roberto, 33080 Roveredo in Piano (Pordenone) (IT)
(74) Representative: Giugni, Valter

(56) References cited:
- WO-A-01/50069
- DE-A1- 1 440 212
- US-A1- 2002 122 691
- US-B1- 6 791 027

## Description

The present invention refers to an improved mounting system for the attachment of covering panels onto upright members, as applicable in particular to the construction of cabinets of metal and plastic materials adapted to accommodate and hold electric apparatus.

As is largely known in the art, in the construction of cabinets that have to be provided with covering panels intended to sustain differently weighing loads or cover differently sized electrical apparatus, use is generally made of upright members, in which there are provided sequences of perforations for the fastening elements used to attach the panels thereto to be able to be inserted therein at different heights, as required.

In this connection, use is generally made of fastening elements of the rotating-pin type adapted to engage corresponding seats or receptacles provided inside the upright member. Such receptacles are constituted by properly shaped blocks provided with a bore allowing the rotating pin to pass therethrough, and a pair of internal tabs for the stem of the pin, duly provided with corresponding notches, to be able to engage them.

Especially in the case of modular panels, this prior-art solution has however a major drawback in that it requires mounting a large number of fastening elements inside each single upright members at each one of the positions at which the cabinet covering panels may or have then to be mounted. Mounting such fastening elements inside the upright members is quite awkward an operation, which moreover requires a lot of time to be carried out and involves a marked possibility for positioning errors to be made when placing them.

WO 01/50069 A discloses a structural connection between a first component and a second component. The first component includes an inner-longitudinal extending aluminium extrusion which is encased in an outer extrusion. The second component is a mounting bolt having an elongated threaded section and a special mounting and retaining head. Covering panels are mentioned, but without giving any information on the means to removably support them on the structure.

DE 14 40 212 A1 discloses an attachment system of a folded panel to a plurality of upright member by means of fastening elements. Bar elements are inserted in the panel folds and the fastening members cross the wings of the bar elements

US 2002/0122691 discloses a connector insertable and removable to and from T-slots of aluminium profile extrusions. A plurality of connectors are needed and should be individually positioned along each profile.

US 6,791,927 discloses a component kit for a switch cabinet having plug-in projections arranged only in the corner areas of the cabinet.

It therefore is a purpose of the present invention to provide an improved system for mounting covering panels on to upright members, which allows for a much simpler construction and is furthermore more convenient and efficient in practical use.

Another purpose of the present invention is to drastically reduce the number of fastening elements needed in each upright member, while doing away with the need for such fastening elements to be displaced in the case of changes in the arrangement or set-up of the covering panels.

According to the present invention, these and further aims are reached in a mounting system incorporating the characteristics as recited in the appended claims.

Anyway, features and advantages of the mounting system according to the present invention may be more readily understood from the description that is given below by way of non-limiting example with reference to the accompanying drawings, in which:
- Figure 1 is a partial exploded perspective view of the system according to the present invention;
- Figure 2 is a cross-sectional view of the system illustrated in Figure 1, as viewed in a disassembled condition;
- Figure 3 is a cross-sectional view of the system illustrated in Figure 1, as viewed in an assembled condition;
- Figure 4 is a partial perspective view of a different embodiment of the system according to the present invention.

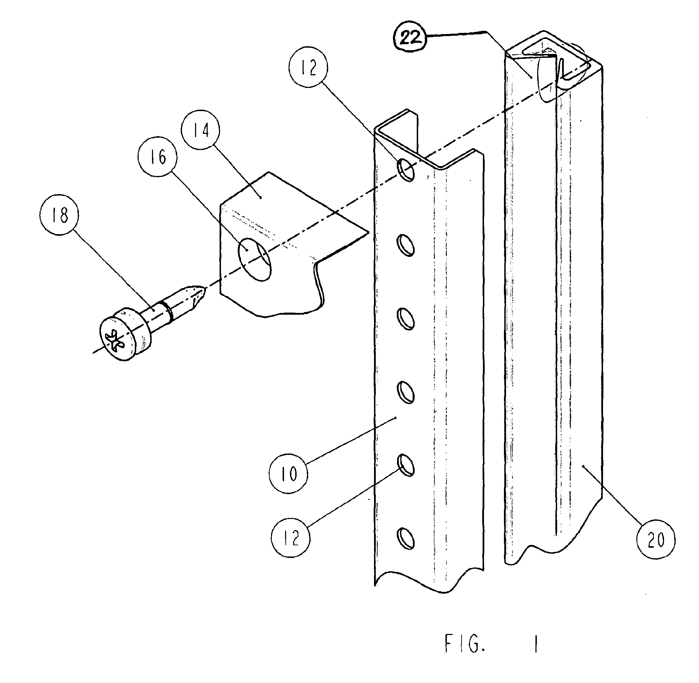

As it can be clearly noticed in the Figures, the mounting system according to the present invention for the attachment of covering panels onto upright members is adapted to be applied to structures, such as cabinets made of metal or plastic materials as intended for instance to accommodate and house electrical apparatus, which are based on the use of traditional upright members 10 having a usually C-shaped cross-section. In each such upright member 10 there is provided a sequence of perforations 12, which are duly aligned and generally spaced at equal intervals relative to each other, along the central face of the C-shaped upright member (Figure 1).

On to these upright members 10 there is attached a covering panel 14, which is in turn provided with corresponding perforations 16 that are designed to axially coincide with respective perforations 12 in the upright members 10. Fastening of the panel 14 to each upright member 10 is advantageously performed with the use of fastening elements 18 of the rotating-pin type.

The covering panels 14 must be mounted in the appropriate position relative to the upright members 10, which they have to be attached to, and the fastening pins 18 must engage corresponding receptacles that are suitably provided inside the upright members 10 themselves.

According to the present invention, inside each such upright member 10 there is inserted a continuous section bar 20 extending axially over the full useful length of the same upright member, so as to form a single longitudinal receptacle extending along an axis that is parallel to the axis of alignment of the perforations 12 of the upright member 10.

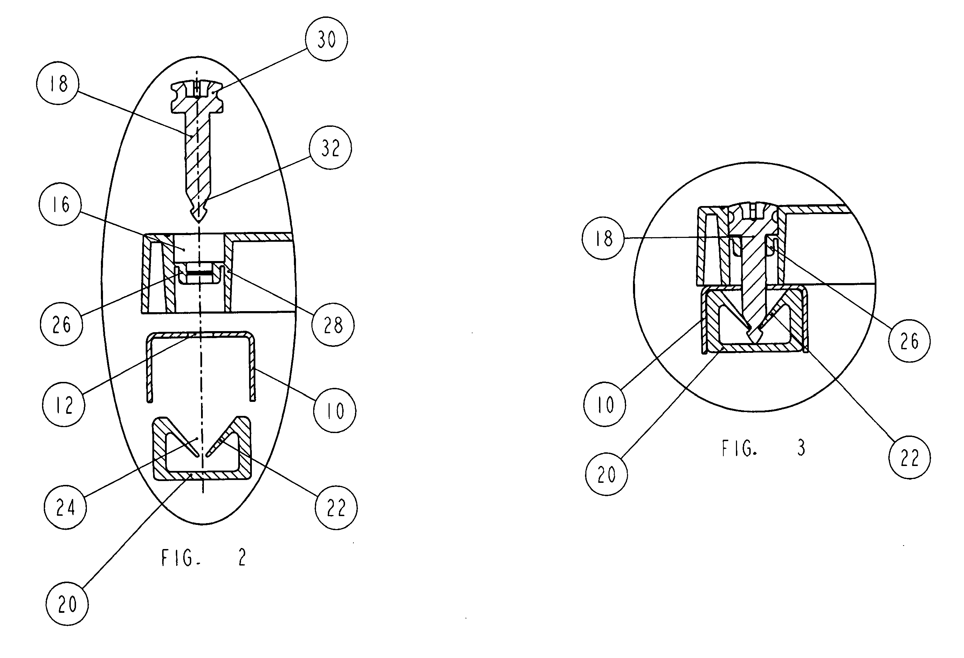

To this purpose, even the section bar 20 features a substantially C-shaped cross-section that is complementary and opposite to the corresponding cross-section of the upright member 10. Unlike the upright member itself, however, the free ends of the section bar 20 extend with wings 22 folding inwards, i.e. towards the inner side of the same section bar, so as to form a longitudinal channel 24 (Figure 2) constituting the actual receptacle for the pins 18 used to fasten the covering panel 14 to the upright member 10.

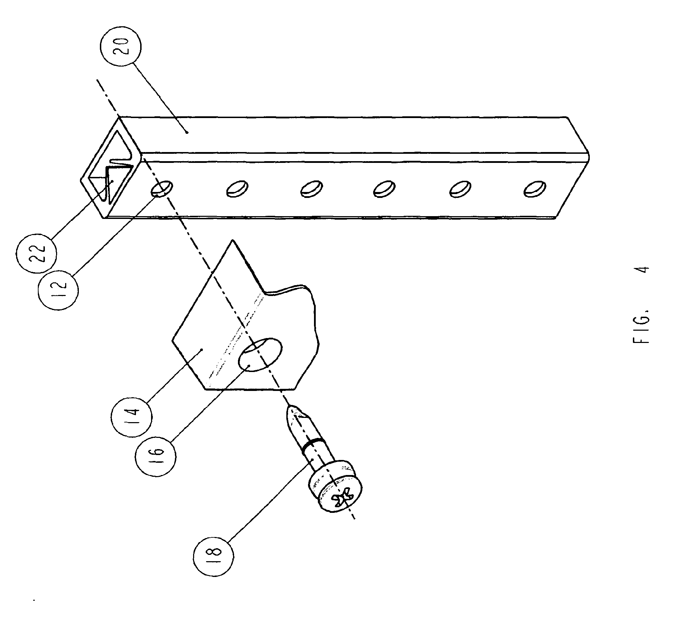

It can be most readily appreciated that the section bar 20 can be provided directly as an integral, unitary piece with the upright member 10, as this is illustrated in Figure 4, wherein the assembly is preferably made of plastics, i.e. as a single-piece plastic moulding.

Preferably, the fastening elements 18 are in the form of pins provided with an enlarged head 30 and notches 32 provided on mutually opposing sides towards the end portion of the stem. The enlarged head of each such pin 18 is adapted to abut against a collar 26 provided inside a receptacle 28, which defines the perforation 16 in the covering panel 14.

For the panel 14 to be fastened on to the upright members 10 (Figure 3), the section bar 20 must first of all be fully inserted in the cavity of the upright member 10. The covering panel 14 must then be brought into contact with, i.e. to rest against the upright member 10, while introducing the pin 18 in the perforation 16 until the head 30 of the same pin eventually comes to abut against the collar 26 of the receptacle 28. As a result, the end portion of the stem of the pin 18 moves into the receptacle 24 of the section bar 20, so that a simple rotation of the same pin causes the notches 32 to engage the wings 22 of the section bar.

The above-described inventive solution is therefore fully effective in enabling the afore-noted aims and advantages to be reached. In particular:
- it simplifies the assembly work needed to attach the panels 14 to the upright members 10, since this does not involve any accurate positioning of a multiplicity of receptacles, i.e. a receptacle for each fastening pin 18;
- it does away with the need for the receptacles of the pins 18 to be displaced inside the upright members 10 whenever the arrangement or the position of the covering panels 14 has to be modified.

## Claims

1. Mounting system comprising the attachment of covering panels (14) to upright members (10), in particular for cabinets housing electrical apparatus, in which each upright member (10) is provided with a number of aligned perforations (12) adapted to enable fastening elements (18) of the rotating-pin type to be inserted therein to engage corresponding receptacles provided inside the upright member, **characterized in that** the receptacles receiving the fastening pins are provided in a continuous section bar (20) associated to each upright member (10), each upright member (10) and the corresponding continuous section bar (20) have complementary, mutually opposite C-shaped cross-sections, the cross section of the continuous section bar being provided with wings (22) folded inwards into the same section bar so as to form a single longitudinal channel (24) that constitutes the receptacle for receiving the fastening pins (18), the pins (18) being provided with notches (32) near the end portion of the stem thereof, so as to be able to engage the wings (22) of the channel (24) through axial insertion therein and rotation about their own axis.

2. Mounting system for the attachment of covering panels to upright members according to claim 1, **characterized in that** the continuous section bar (20) is received inside each upright member (10).

3. Mounting system for the attachment of covering panels to upright members according to claim 1, **characterized in that** the continuous section bar (20) is made in a single-piece construction with the related upright member (10).

4. Mounting system for the attachment of covering panels to upright members according to any of the preceding claims, **characterized in that**, said continuous section bar (20) is provided with a single longitudinal receptacle (24) extending over the whole length of the corresponding upright member (10) along an axis that extends parallel to the axis of alignment of the perforations (12) in the same upright member.

## Patentansprüche

1. Montagesystem, das die Anbringung von Abdeckplatten (14) an Stützenelementen (10), insbesondere für Schränke, die elektrische Vorrichtungen aufnehmen, umfasst, wobei jedes Stützenelement (10) mit einer Anzahl ausgerichteter Löcher (12) versehen ist, die so eingerichtet sind, dass sie es ermöglichen, Befestigungselemente (18) vom Drehbolzentyp in sie einzuführen, um in entsprechende Aufnahmen einzugreifen, die im Inneren des Stützenelementes vorhanden sind, **dadurch gekennzeichnet, dass** die Aufnahmen, die die Befestigungsbolzen aufnehmen, in einer durchgehenden Profilschiene (20) vorhanden sind, die zu jedem Stützenelement (10) gehört, wobei jedes Stützenelement (10) und die entsprechende durchgehende Profilschiene (20) komplementäre, zueinander entgegengesetzte C-förmige Querschnitte haben, der Querschnitt der durchgehenden Profilschiene mit Flügeln (22) versehen ist, die in diese Profilschiene hinein nach innen gefaltet sind, so dass ein einzelner Längskanal (24) entsteht, der die Aufnahme zum Aufnehmen der Befestigungsbolzen (18) bildet, und die Bolzen (18) mit Einkerbungen (32) in der Nähe des Endabschnitts ihres Schafts versehen sind, so dass sie mit den Flügeln (22) des Kanals (24) über axiales Einführen in diesen und Drehung um ihre eigene Achse in Eingriff gebracht werden können.

2. Montagesystem für die Anbringung von Abdeckplatten an Stützenelementen nach Anspruch 1, **dadurch gekennzeichnet, dass** die durchgehende Profilschiene (20) im Inneren jedes Stützenelementes (10) aufgenommen ist.

3. Montagesystem für die Anbringung von Abdeckplatten an Stützenelementen nach Anspruch 1, **dadurch gekennzeichnet, dass** die durchgehende Profilschiene (20) als aus einem Teil mit dem dazugehörigen Stützenelement (10) bestehende Konstruktion ausgeführt ist.

4. Montagesystem für die Anbringung von Abdeckplatten an Stützenelementen nach einem der vorangehenden Ansprüche, **dadurch gekennzeichnet, dass** die durchgehende Profilschiene (20) mit einer einzelnen Längsaufnahme (24) versehen ist, die sich entlang einer Achse, die parallel zu der Ausrichtachse der Löcher (12) in diesem Stützenelement verläuft, über die gesamte Länge des entsprechenden Stützenelementes (10) erstreckt.

## Revendications

1. système de montage comprenant la fixation de panneaux de revêtement (14) à des éléments verticaux (10), en particulier pour des armoires logeant des appareils électriques, système dans lequel chaque élément vertical (10) est doté d'un certain nombre de perforations alignées (2) adaptées pour permettre à des éléments de fixation (18) du type cheville rotative, à insérer à l'intérieur, de s'engager dans des logements correspondants ménagés à l'intérieur de l'élément vertical, **caractérisé en ce que** les logements recevant les chevilles de fixation sont ménagés dans un profilé continu (20) associé à chaque élément vertical (10), chaque élément vertical (10) et le profilé continu (20) présentent des sections transversales complémentaires en forme de C opposées l'une à l'autre, la section transversale du profilé continu étant dotée d'ailes (22) repliées vers l'intérieur dans le même profilé de façon à former un canal longitudinal unique (24) qui constitue le logement destiné à recevoir les chevilles de fixation (18), les chevilles (18) étant dotées d'encoches (32) près de la portion d'extrémité de leur tige, de façon à pouvoir s'engager dans les ailes (22) du canal (24) en les insérant à l'intérieur et en les faisant tourner autour de leur axe.

2. Système de montage pour la fixation de panneaux de revêtement à des éléments verticaux selon la revendication 1, **caractérisé en ce que** le profilé continu (20) est reçu à l'intérieur de chaque élément vertical (10).

3. Système de montage pour la fixation de panneaux de revêtement à des éléments verticaux selon la revendication 1, **caractérisé en ce que** le profilé continu (20) est fabriqué d'une seule pièce avec l'élément vertical (10) associé.

4. Système de montage pour la fixation de panneaux de revêtement à des éléments verticaux selon les revendications précédentes, **caractérisé en ce que** ledit profilé continu (20) est doté d'un seul logement longitudinal (24) s'étendant sur toute la longueur de l'élément vertical correspondant (10) le long d'un axe qui s'étend parallèlement à l'axe de l'alignement des perforations (12) ménagées dans le même élément vertical.
